# EUROPÄISCHE PATENTSCHRIFT

(11) **EP 3 006 895 B1**
(45) Veröffentlichungstag und Bekanntmachung des Hinweises auf die Patenterteilung: **19.02.2020**
(21) Anmeldenummer: 14188461.9
(22) Anmeldetag: 10.10.2014
(51) Int. Cl.: G01C 15/00, G01S 17/66, G01B 11/00, G01S 7/481

(54) **LASERTRACKER MIT WARMLUFT-DURCHSTRÖMUNGS-ABSCHIRMUNG FÜR DEN MESSSTRAHL**
LASER TRACKER WITH HOT AIR FLOW SHIELDING FOR THE MEASUREMENT BEAM
APPAREIL DE SUIVI LASER AVEC BLINDAGE DE PASSAGE D'AIR CHAUD POUR LE RAYON DE MESURE

(43) Veröffentlichungstag der Anmeldung: 13.04.2016
(73) Patentinhaber: Leica Geosystems AG, 9435 Heerbrugg (CH)
(72) Erfinder: BÖCKEM, Burkhard, 5415 Rieden (CH); FUCHS, Simon, 5040 Schöftland (CH); LÜTHI, Thomas, 5000 Aarau (CH); KÜPFER, Manfred, 79761 Waldshut-Tiengen (DE)
(74) Vertreter: Kaminski Harmann

(56) Entgegenhaltungen:
- EP-A1- 0 887 680
- EP-A1- 2 141 450
- EP-A1- 2 381 269
- EP-A1- 2 620 745
- EP-A1- 2 620 746
- EP-A1- 2 634 594
- DE-B3-102010 032 726
- US-A- 5 631 772

## Beschreibung

Die Erfindung betrifft einen Lasertracker zur Positionsbestimmung und fortlaufenden Verfolgung eines als Retroreflektor ausgebildeten oder zumindest einen Retroreflektor aufweisenden Ziels, nach dem Oberbegriff des Anspruchs 1.

Zum Vermessen eines Zielpunktes sind seit der Antike eine Vielzahl von Verfahren bzw. Geräten bekannt. Als räumliche Standarddaten werden dabei Entfernung und Winkel von einem Messgerät zu einem zu vermessenden Zielpunkt aufgenommen sowie insbesondere der Ort des Messgerätes nebst evtl. vorhandenen Bezugspunkten erfasst.

Bekannte Beispiele für solche Vermessungsgeräte stellen ein Lasertracker, ein Theodolit, ein Tachymeter oder eine Totalstation dar, wobei letztere auch als elektronischer Tachymeter oder Computer-Tachymeter bezeichnet wird.

Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Messvorrichtungen, die für eine fortlaufende Verfolgung eines Zielpunkts und eine koordinative Positionsbestimmung dieses Punkts ausgebildet sind, können allgemein im Zusammenhang mit der industriellen Vermessung unter dem Begriff Lasertracker zusammengefasst werden. Ein Zielpunkt kann dabei durch eine retro-reflektierende Einheit (z. B. Tripleprisma oder Corner-Cube-Reflektor) repräsentiert sein, die mit einem gerichteten optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z. B. mittels Laufzeit- oder Phasendifferenzmessung oder mittels des Fizeau-Prinzips ermittelt.

Ausserdem wird in Trackersystemen (wie z.B. in der EP 2 381 269 A1 beschrieben) gattungsgemäss auf einem Feinanziel- bzw. Trackingsensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Feinanzielsensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik können zusätzlich mit einer oder mehreren optischen Bilderfassungseinheit mit einem zweidimensionalen, lichtempfindlichen Array, z. B. einer CCD- oder CID-Kamera oder einer auf einem CMOS-Array basierenden Kamera, oder mit einem Pixelarraysensor und mit einer Bildverarbeitungseinheit ausgeführt sein.

Derartige Kameras - in der Regel mit verglichen mit der Empfangsoptik für die reflektierte Messstrahlung weitem Blickwinkel - können beispielsweise zur Bereitstellung von Zielsuchfunktionalitäten und/oder 6-dof-Bestimmungs-Funktionalitäten (letzteres in Verbindung mit der Verwendung eines z.B. tastenden Messhilsfmittels) angebracht und vorgesehen sein.

Mit dem Erfassen und Auswerten eines Bildes - mittels Bilderfassungs- und Bildverarbeitungseinheit - eines sogenannten Messhilfsinstruments mit Markierungen, deren relative Lage zueinander bekannt ist, kann auf eine Orientierung eines an dem Messhilfsinstrument angeordneten Objekts im Raum geschlossen werden. Zusammen mit der bestimmten räumlichen Position des Zielpunkts (etwa eines mit dem Laserstrahl angezielten Retro-Reflektors am Messhilfsinstrument) kann ferner letztlich die Position und Orientierung des Objekts im Raum absolut und/oder relativ zum Lasertracker präzise bestimmt werden. Ein derartiges Koordinatenmessgerät mit einem Lasertracker und einer Bilderfassungseinheit für die Bestimmung von Position und Orientierung von Objekten im Raum, an denen Lichtpunkte und Reflektoren angeordnet sind, ist beispielsweise in der US 5,973,788 beschrieben.

Derartige Messhilfsinstrumente können sogenannte Tastwerkzeuge, die mit ihrem Kontaktpunkt auf einem Punkt des Zielobjektes positioniert werden, sein. Das Tastwerkzeug weist Markierungen, z. B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Punktvermessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z. B. als Interferometer und/oder als Absolutdistanzmesser (z.B. basierend auf Laufzeit- oder Phasendifferenzmessung oder das Fizeau-Prinzip) ausgebildet sein kann.

In der WO 2007/079600 A1 wird ein gattungsgemässes laserbasiertes Koordinatenmessgerät geoffenbart, bei welchem eine Lichtaustritts- und Lichtempfangsoptik der Distanzmessvorrichtung, eine Messkamera und eine Übersichtskamera auf einem gemeinsamen, bezüglich mindestens zweier Achsen drehbaren Element angeordnet sind und ein Laserstrahl mittels eines Lichtleiters von einem ausserhalb der Strahllenkeinheit angebrachten Lasermoduls in die Distanzmessvorrichtung eingekoppelt wird.

Im Zuge der fortschreitenden Entwicklung technologisch weit entwickelter Messsysteme, die ein sehr hohes Genauigkeitspotential aufweisen, gewinnen Strategien zur Korrektur atmosphärisch induzierter Störeffekte eine immer grössere Bedeutung. Diese atmosphärisch induzierten Störeffekte entstehen in einem grossen Zeitmassstabsbereich: Systematische Abweichungen, im geodätischen Zusammenhang "Refraktion" genannt und verursacht durch einen Brechungsindex-Gradienten in der Beobachtungsumgebung, gehen langsam zu stochastischen Abweichungen über, die durch optische Turbulenz hervorgerufen werden, bzw. werden zumindest in ihrer Auswirkung äquivalent zum Effekt optischer Turbulenzen.

Refraktionskorrigierte optische Richtungs- und Winkelmessungen, aber auch refraktionskorrigierte optische Distanzmessungen, sind im Rahmen zahlreicher Aufgabenfelder auf dem Gebiet hochgenauer Vermessung erforderlich. Diese Aufgabenfelder beinhalten beispielsweise Vermessungsanwendungen im Bereich der industriellen Vermessung (etwa bei industriellen Qualitätskontroll- oder Montageprozessen, z.B. in der Flugzeugbau- oder Automobilindustrie).

Aufgabe der Erfindung ist die Bereitstellung eines verbesserten Lasertrackers, bei dem sich gerätebedingte Abwärmeeinflüsse zumindest weniger oder möglichst gar nicht mehr Messresulate, die auf das Aussenden und Empfangen der gerichteten Messstrahlung basieren, auswirken.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein Lasertracker zur fortlaufenden Positionsbestimmung und fortlaufenden Verfolgung eines als Retroreflektor ausgebildeten oder zumindest einen Retroreflektor aufweisenden Ziels. Der Lasertracker umfasst mindestens eine eine Stehachse definierende Basis, eine Strahllenkeinheit zur Emission einer Messstrahlung aus einer Messstrahlungsaustritts-Apertur und zum Empfang von zumindest einem Teil der am Ziel reflektierten Messstrahlung. Die Strahllenkeinheit ist um die Stehachse und eine Neigungsachse relativ zur Basis schwenkbar (insbesondere motorisiert). Durch eine Emissionsrichtung der Messstrahlung ist eine Messachse definiert. Des Weiteren umfasst der Lasertracker eine Distanzmesseinheit zur präzisen Distanzbestimmung zum Ziel vermittels der Messstrahlung, eine Winkelmessfunktionalität zur Bestimmung einer Ausrichtung der Strahllenkeinheit relativ zur Basis und eine Zielerfassungseinheit zur Bestimmung eines Auftreffpunkts von vom Retroreflektor reflektierter Strahlung auf einem Sensor der Zielerfassungseinheit und zur Erzeugung eines Ausgangssignals zur Steuerung einer Fein-Anzielfunktionalität und insbesondere einer Zielverfolgungsfunktionalität, wobei Distanz und Position des Ziels fortlaufend relativ zum Lasertracker (10) bestimmt werden.

Erfindungsgemäss weist der Lasertracker eine Wärmeeinflussverringerungskomponente auf, die so ausgebildet und am Lasertracker angeordnet ist, dass ein Aufstieg von durch Wärmeabstrahlung von inneren Komponenten des Lasertrackers erzeugter Warmluft in einen Nahbereich eines Freistrahlengangs im Nahbereichs-Strahlengang der Messstrahlungsaustritts-Apertur des Lasertrackers verhindert wird.

Als kennzeichnend für den "Nahbereichs-Strahlengang" soll dabei ein Bereich in einem Abstand von bis zu 20 cm, insbesondere von bis zu 10 cm, im Spezieller, von bis zu 5 oder 3 cm von der Messstrahlungsaustritts-Apertur verstanden werden.

Insbesondere weist der erfindungsgemässe Lasertracker eine um die Stehachse relativ zur Basis motorisiert schwenkbare und die Neigungsachse definierende Stütze auf, und die Strahllenkeinheit ist als eine Anzieleinheit mit einer Teleskopeinheit ausgebildet, die um die Neigungsachse relativ zur Stütze motorisiert schwenkbar ist und zur Emission der Messstrahlung und zum Empfang von zumindest einem Teil der am Ziel reflektierten Messstrahlung ausgebildet ist.

Gemäss einer Ausführungsform umgibt die Wärmeeinflussverringerungskomponente zumindest einen Teil des Nahbereichs-Strahlengangs der Messstrahlungsaustritts-Apertur und/oder ist benachbart dazu ausgebildet.

Insbesondere umfasst die die Wärmeeinflussverringerungskomponente ein wärmeabschirmendes Material mit niedriger Wärmeleitung, insbesondere Glas oder Kunststoff, im Speziellen für einen Durchtritt von Messstrahlung transparentes Glas oder transparenten Kunststoff.

Gemäss einer weiteren Ausführungsform ist die Wärmeeinflussverringerungskomponente zusätzlich als ein Vollschild oder Teilschild ausgebildet, der zumindest teilweise wärmeabstrahlende Bereiche der Anzieleinheit abdeckt, insbesondere mit einer zwischen dem Vollschild oder Teilschild und der Anzieleinheit befindlichen Isolierschicht, welche auch als ein Luftpolster ausgebildet sein kann, insbesondere wobei optisch transparente Öffnungen für die Messstrahlungsaustritts-Apertur, KameraOptiken und/oder Beleuchtungsmittel vorgesehen sind. Gemäss einer weiteren Ausführungsform ist die Wärmeeinflussverringerungskomponente Zylindermantel- oder kegelstumpfmantelförmig ausgebildet und umgibt den Nahbereichs-Strahlengang an der Messstrahlungsaustritts-Apertur.

Gemäss einer weiteren Ausführungsform umfasst die Wärmeeinflussverringerungskomponente zusätzlich eine Abdeckung aus wärmeisolierendem Material, insbesondere Kunststoff, an einer Basis des Lasertrackers.

Gemäss einer weiteren Ausführungsform weist die Wärmeeinflussverringerungskomponente zusätzlich einen an der Basis oder der Stütze des Lasertrackers angeordneten Lüfter oder Ventilator auf, für Absaugung von, insbesondere in einem Bereich der Basis, erwärmter Luft und Verhinderung von deren Aufstieg in einen Bereich des Nahbereichs-Strahlengangs durch Abblasung der angesaugten Luft in einem quergerichteten Luftstrom, oder für Einblasen von nicht erwärmter Aussenluft in einen Bereich unterhalb des Nahbereichs-Strahlengangs der der Messstrahlungsaustritts-Apertur, zur Verhinderung von deren Aufstieg in einen Bereich des Nahbereichs-Strahlengangs.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen
- Fig. 1:: eine erfindungsgemässe Ausführungsform für einen Lasertracker und ein Ziel;
- Fig. 2a+b:: zwei weitere erfindungsgemässe Ausführungsformen für Lasertracker und Ziele;
- Fig. 3:: ein Beispiel für eine Frontansicht der Ausführungsform des Lasertrackers aus Figur 2a;
- Fig. 4:: in einer Ausschnittsvergrösserung eine Infrarotaufnahme bzw. ein Wärmebild des Bereichs der Oberflächentemperaturen einer Anzieleinheit eines Lasertrackers nach dem Stand der Technik;
- Fig. 5:: den Bereich der Anzieleinheit eines beispielhaften Lasertrackers mit einer Wärmeeinfluss-Verringerungskomponente;
- Fig. 6:: eine Illustration für den Darstellungsbereich von Fig. 5, in einem Wärmebild analog zu Fig. 4, die Auswirkung eines wärmeisolierenden Schilds gemäss der Ausführungsform einer Wärmeeinfluss-Verringerungskomponente nach Fig. 5;
- Fig. 7:: in einer zu Fig. 5 weitgehend analogen Darstellung den Bereich der Anzieleinheit eines erfindungsgemässen Lasertrackers mit einer erfindungsgemässen Wärmeeinfluss-Verringerungskomponente;
- Fig. 8:: eine Illustration für den Darstellungsbereich von Fig. 7, in einem Wärmebild analog zu Fig. 4 und Fig. 6, die gemeinsame Auswirkung der wärmeisolierenden Rohrabschirmung gemäss der Ausführungsform der erfindungsgemässen Wärmeeinfluss-Verringerungskomponente von Fig. 7 und des wärmeisolierenden Schilds gemäss Fig.5 und Fig. 6;
- Fig. 9:: den Bereich der Anzieleinheit einer weiteren, nicht direkt die Erfindung betreffende Ausführungsform eines erfindungsgemässen Lasertrackers mit einer anderen Ausführungsform einer Wärmeeinfluss-Verringerungskomponente;
- Fig. 10:: in einem Wärmebild eine Illustration des Effekts einer dreieckförmig ausgebildeten Ausführungsform einer zusätzlichen Wärmeeinfluss-Verringerungskomponente, die knapp unterhalb der Empfangsoptik des erfindungsgemässen Lasertrackers angeordnet ist;
- Fig. 11:: in einem Wärmebild eine Illustration des Effekts eines die untere Hälfte der Anzieleinheit vollständig abdeckenden Abschirmung einer zusätzlichen Wärmeeinfluss-Verringerungskomponente, welche die Empfangsoptik des Lasertrackers in einem unteren Bereich teilweise umgibt;
- Fig. 12:: in einem Wärmebild eine Illustration des kombinierten Effekts mit einer, zusätzlich zu der Ausführungsform gemäss Fig. 11, auch die obere Hälfte der Anzieleinheit vollständig abdeckenden Abschirmung, also einer Vollabschirmung als einer zusätzlichen Wärmeeinfluss-Verringerungskomponente, welche die Empfangsoptik des Lasertrackers vollständig umgibt;
- Fig. 13:: in einem Wärmebild eine Illustration des Effekts mit einer Kombination aus der Vollabschirmung gemäss Fig. 12 und einer Abwandlung zu der erfindungsgemässen rohrförmigen Abschirmung gemäss Fig. 8;
- Fig. 14:: eine - hinsichtlich des funktionalen Prinzips anders als entsprechend den vorangehenden Beispielen ausgebildete - Ausführungsform einer zusätzlichen Wärmeeinfluss-Verringerungskomponente für einen erfindungsgemässen Lasertracker;
- Fig. 15:: als Beispiel für eine weitere Ausführungsform einer zusätzlichen Wärmeeinfluss-Verringerungskomponente einen zusätzlichen Lüfter bzw. Ventilator, der auf einem Sockel bzw. einer Basis des erfindungsgemässen Lasertrackers angeordnet und betrieben ist;
- Fig. 16:: als Beispiel für eine weitere Ausführungsform einer zusätzlichen Wärmeeinfluss-Verringerungskomponente einen zusätzlichen Lüfter bzw. Ventilator, der auf dem Sockel bzw. der Basis des erfindungsgemässen Lasertrackers angeordnet und betrieben ist, um, in Abwandlung zu dem Beispiel gemäss Fig. 15, in einer dazu senkrechten Richtung abzublasen; und
- Fig. 17:: als Beispiel für eine weitere Ausführungsform einer zusätzlichen Wärmeeinfluss-Verringerungskomponente einen zusätzlichen Lüfter bzw. Ventilator, der in einem unteren Bereich einer Stütze des erfindungsgemässen Lasertrackers angeordnet und betrieben ist, um nicht betriebsbedingt erwärmte Umgebungsluft anzusaugen und in einem Luftstrom weg von einem Nahbereichs-Strahlengang des Lasertrackers abzublasen.

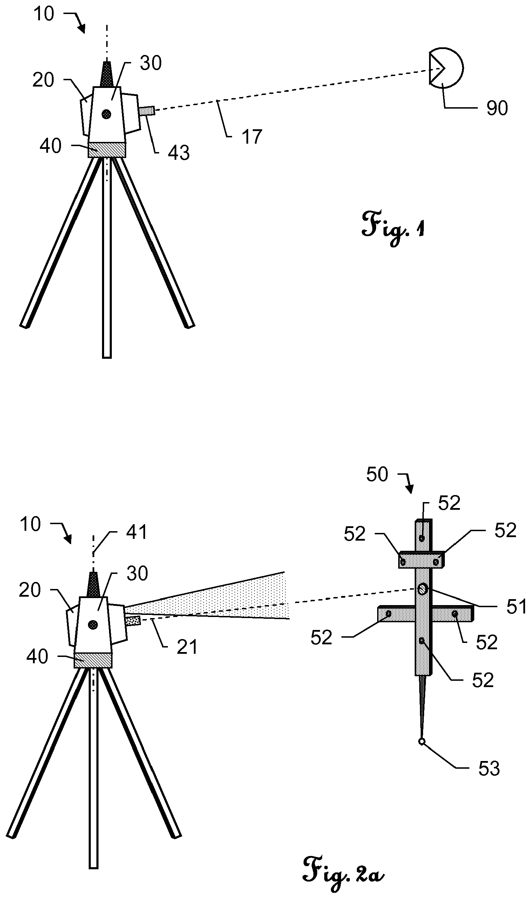

Figur 1 zeigt eine erste Ausführungsform für einen Lasertracker 10 und ein als Messkugel (mit integriertem Retroreflektor 90) ausgebildeten Ziel. Der Lasertracker 10 weist eine Basis 40 und eine Stütze 30 auf, wobei die Stütze 30 um eine durch die Basis 40 definierte Schwenkachse oder Stehachse relativ zur Basis schwenkbar bzw. rotierbar angeordnet ist. Zudem ist eine Anzieleinheit 20 derart an der Stütze 30 angeordnet, dass die Anzieleinheit 20 relativ zur Stütze 30 um eine Neigungsachse (Transitachse) schwenkbar ist (hier nicht dargestellt). Durch eine so um zwei Achsen bereitgestellte Ausrichtungsmöglichkeit der Anzieleinheit 20 kann ein von dieser Einheit 20 emittierter Laserstrahl 17 flexibel ausgerichtet und damit Ziele angezielt werden. Die Schwenkachse und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 17 auf den Reflektor 90 der Reflektorkugel gerichtet und wird an diesem zurück zum Lasertracker 10 retro-reflektiert. Mittels dieses zurückkommenden Messlaserstrahls kann eine Entfernung zum Reflektor, z.B. interferometrisch und/oder mittels Laufzeit- oder Phasenmessung, bestimmt werden. Der Lasertracker 10 verfügt dazu über eine oder mehrere Distanzmesseinheiten zur Bestimmung dieser Entfernung zwischen dem Tracker 10 und dem Reflektor und über Winkelmesser, die eine Drehstellung der Anzieleinheit 20 bzw. der Stütze 30 bestimmen. Es werden also dann als Raumkoordinaten der als Ziel dienenden Messkugel zwei Raumwinkel und eine Entfernung aufgenommen bzw. als Messergebnis bereitgestellt.

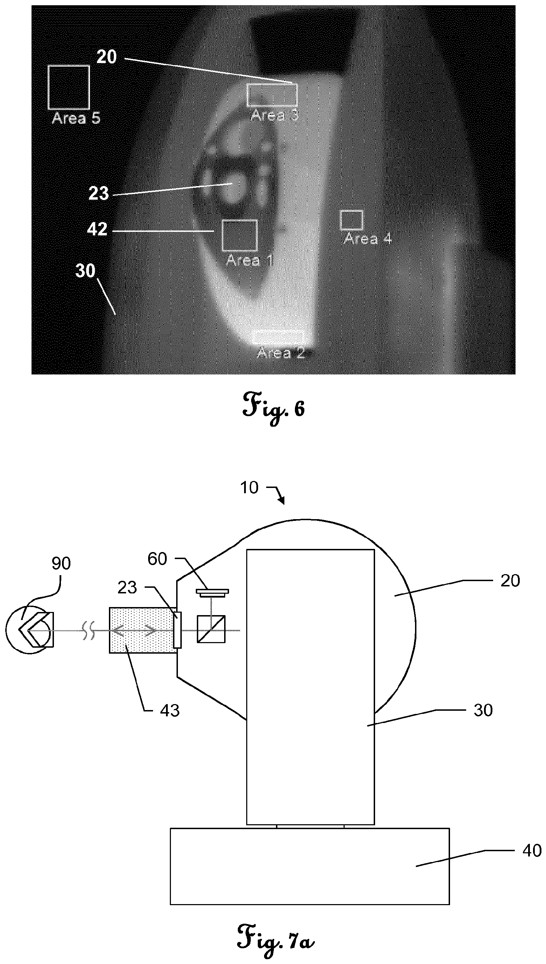

Zur Feinanzielung und Verfolgung des Ziels werden auf einem dem Strahlengang der Messstrahlung zugeordneten Positionssensor eine Position des reflektierten Messstrahls auf dem Sensor (bzw. eine Ablage der auftreffenden Strahlung bezüglich einer Nullpunktposition) bestimmt (zum Sensor dieser Art siehe auch z.B. Referenzzeichen 60 in Figur 7a). Mittels dieser Ablage, welche auf dem Sensor in zwei Richtungen bestimmbar ist, kann eine Positionsänderung des Reflektors detektiert und der Laserstrahl entsprechend dieser Änderung nachgeführt und somit fortlaufend der Reflektor angezielt werden (und zwar im Reflektorzentrum).

Erfindungsgemäss weist der in Figur 1 gezeigte Lasertracker einen rohrförmigen Körper 43 im Bereich der Messstrahlungsaustritts-Apertur auf, wie dies in den späteren Figuren nochmals im Detail dargestellt und weiter unten noch beschrieben ist.

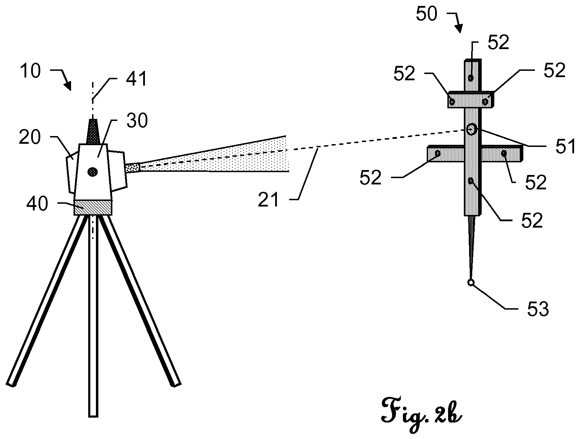

In den Figuren 2a und 2b sind dabei weitere Varianten von Lasertrackern in Verwendung mit jeweils einem Messhilfsobjekt 50, dessen Position und Orientierung mit 6-DoF (d.h. mit sechs Freiheitsgraden, drei translatorische und drei rotatorische) bestimmt werden soll, dargestellt.

Der Lasertracker 10 aus Figur 2a weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 (Schwenkeinheit) derart an der Stütze 30 angeordnet, dass die Anzieleinheit 20 relativ zur Stütze 30 um eine Kippsachse (Neigungs- bzw. Transitachse) drehbar ist. Durch eine so um zwei Achsen bereitgestellte Ausrichtungsmöglichkeit der Anzieleinheit 20 kann ein von dieser Einheit 20 emittierter Laserstrahl 21 exakt ausgerichtet und damit Retroreflektoren angezielt werden. Dieses Ausrichten kann mittels einer Motorisierung automatisch erfolgen. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Messlaserstrahl 21 auf den Retroreflektor 51 des Messhilfsobjekts 50 gerichtet und wird an diesem zurück zum Lasertracker 10 retro-reflektiert. Mittels dieses Messlaserstrahls 21 kann eine Entfernung zum Objekt 50 bzw. zum Reflektor 51, insbesondere mittels Laufzeitmessung, mittels des Phasenmessprinzips oder mittels des Fizeau-Prinzips, bestimmt werden. Der Lasertracker 10 verfügt hierzu über eine Entfernungsmesseinheit (z.B. mit Interferometer und Absolutdistanzmesser, oder nur einen Absolutdistanzmesser) und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Schwenkeinheit 20, eine Bilderfassungseinheit auf. Diese Bilderfassungseinheit kann zum Zweck einer Positionsbestimmung einer Sensorbelichtung auf einem Sensor bzw. in einem erfassten Bild einen CMOS aufweisen oder ist insbesondere als CCD- oder Pixelsensorarray-Kamera ausgebildet. Derartige Sensoren erlauben eine positionssensitive Detektion von erfasster Belichtung auf dem Detektor. Das Messhilfsobjekt 50 weist einen taktilen Sensor 53 auf, dessen Rubinkugel mit einer zu vermessenden Zielobjektoberfläche in Kontakt gebracht werden kann. Während dieser Kontakt zwischen dem Tastwerkzeug 50 und der Messobjektoberfläche besteht können eine Position des Kontaktpunktes 53 im Raum und damit die Koordinaten des angetasteten Punkts an der Messobjektoberfläche exakt bestimmt werden. Dieses Bestimmen erfolgt vermittels einer definierten relativen Positionierung des Kontaktpunkts 53 zum Reflektor 51 und zu am Messhilfsobjekt 50 angeordneten Referenzmerkmalen 52, die beispielsweise als Leuchtdioden (LEDs) ausgebildet sein können. Alternativ können die Referenzmerkmale 52 auch derart ausgebildet sein, dass diese bei einem Beleuchten, z.B. mit Strahlung einer definierten Wellenlänge, die auftreffende Strahlung reflektieren (z.B. reflektiv ausgebildete Markierungen 52), insbesondere eine bestimmte Leuchtcharakteristik zeigen, oder dass diese ein definiertes Muster oder Farbkodierung aufweisen. Aus der Lage bzw. Verteilung der durch die Referenzmerkmale 52 erzeugten Lichtpunkte in einem mit einem Sensor der Bilderfassungseinheit erfassten Bild kann somit eine Orientierung des Tastwerkzeugs 50 bestimmt werden.

Als Grundlage für die Bestimmung der Orientierung dient damit das erfasste Bild des Messhilfsobjekts 50 bzw. der bereitgestellten Lichtpunkte des Objekts 50. Für eine insbesondere fokussierte Erfassung der LEDs 52 mit einem optimalen und bekannten Bildmassstab kann der Lasertracker 10 über eine Vario-Zoom-Optik verfügen, d.h. über zwei unabhängig voneinander, relativ zum Bilderfassungssensor positionierbare optische Baugruppen (z.B. Linsen).

Für diese letztendliche Orientierungsbestimmung verfügt der Lasertracker 10 ferner über eine spezielle Bildaufnahme- und -auswertungsfunktionalität, die durch eine Steuerungs- und Verarbeitungseinheit des Trackers 10 ausführbar ist. Im Rahmen dieser Ausführung wird ein Bild der Referenzmerkmale 52 des Messhilfsinstrument 50 erfasst und basierend auf Bildpositionen für die im Bild erfassten Lichtpunkte mittels Bildverarbeitung die Orientierung bzw. Ausrichtung des Messhilfsobjekts 50 abgeleitet. Hierbei ist die Kamera derart ausgerichtet, dass ein Bild in Richtung des mittels des Laserstrahls 21 angezielten Messhilfsmittels 50 erfassbar ist.

Der Lasertracker 10 aus Figur 2b kann dabei im Wesentlichen ähnlich zu jenem aus Figur 2a ausgebildet sein. Ein Unterschied ist, dass die in die Anzieleinheit 20 integrierte Kamera zur Aufnahme des Bildes vom durch die Markierungen 52 gebildeten Muster koaxial zur Laser- und Messachse angeordnet und ausgerichtet ist. Ein Beispiel für eine solche Ausführungsform eines Lasertrackers ist etwa in der Europäischen Patentanmeldung mit der Nummer EP 13167256.0 beschrieben.

Erfindungsgemäss weisen auch die Lasertracker aus den Figuren 2a und 2b jeweils einen rohrförmigen Körper 43 im Bereich der Messstrahlungsaustritts-Apertur auf, wie dies in den späteren Figuren nochmals im Detail dargestellt ist und im Weiteren noch beschrieben wird.

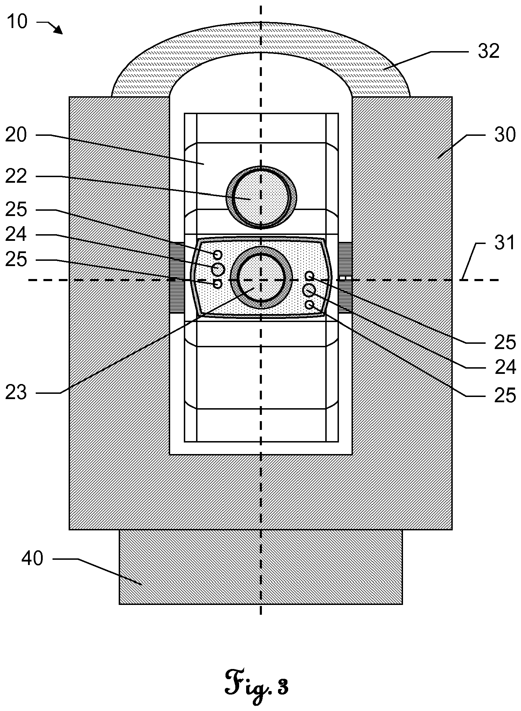

Figur 3 zeigt ein Beispiel für eine Frontansicht der Ausführungsform des Lasertrackers aus Figur 2a, mit einer Basis 40, die beispielsweise auf einem Stativ (nicht dargestellt) angeordnet sein kann. Auf der Basis ist zudem eine eine Neigungsachse 31 definierende, um die Schwenkachse relativ zur Basis 40 schwenkbare Stütze 30 mit einem Griff 32 angeordnet. Ausserdem ist eine Anzieleinheit 20 vorgesehen, wobei diese Anzieleinheit 20 um die Neigungsachse 31 relativ zur Stütze 30 schwenkbar verbaut ist.

Die Anzieleinheit 20 weist beispielsweise ferner eine Variokamera mit einem Variokameraobjektiv 22 und eine Optik bzw. Messstrahlungsaustritts-Apertur 23 auf, die einer in der Anzieleinheit 20 angeordneten Entfernungsmess- und Trackingeinheit zugeordnet ist, wobei vermittels der Optik 23 ein Messlaserstrahl von der Entfernungsmess- und Trackingeinheit zur präzisen Bestimmen einer Entfernung zu einem Ziel und zum Verfolgen des Ziels emittiert wird. Ausserdem sind beispielsweise an der Anzieleinheit 20 zwei Kameras 24 mit jeweils einer Kameraoptik und mit jeweils einem positionssensitiven Detektor und zudem Beleuchtungsmittel 25, welche beispielsweise als LEDs ausgebildet sind und im Betrieb insbesondere Licht im Infrarotbereich emittieren, vorgesehen. Mit diesen Beleuchtungsmitteln 25 kann somit ein Ziel, z.B. ein Reflektor, beleuchtet bzw. angestrahlt werden und zumindest eine Teil der Strahlung durch den Reflektor in Richtung des Lasertrackers 12 bzw. in Richtung der Kameras 24 zurückreflektiert werden. Das reflektierte Licht wird dann mit den Kameras 24 erfasst und vermittels der Kameraoptiken auf dem jeweiligen positionssensitiven Detektor als jeweiliger erster und zweiter Zielreflexspot abgebildet. Hieraus kann nun für jeden dieser Zielreflexspots unter Berücksichtigung der Ausrichtung des Teleskops bzw. der Anzieleinheit 20 ein Richtungswinkel zum als Ziel dienenden Reflektor bestimmt werden. Mittels dieser so erfassten Raumrichtung des Ziels kann ein automatisiertes Auffinden des Ziels erfolgen. Das Auffinden des Ziels kann dabei also insbesondere mittels Stereophotogrammetrie (durch Auswertung der Bildpositionen beider Zielreflexspots) erfolgen.

Nachdem der Laserstrahl auf den Reflektor ausgerichtet ist und von diesem zurückreflektiert wird, kann mittels einer Distanzmesseinheit im Lasertracker 12 bzw. in der Anzieleinheit 20 eine präzise Entfernung zum Reflektor 81 bestimmt werden. Ferner kann der Laserstahl dann an den Reflektor (Retroreflektor) angekoppelt werden und der Reflektor mit dem Strahl verfolgt werden. Hierfür werden auf einem weiteren, dem Strahlengang der Messstrahlung zugeordneten Positionssensor eine Position des reflektierten Messstrahls auf dem Sensor und eine Ablage der auftreffenden Strahlung bezüglich einer Nullpunktposition bestimmt (siehe auch z.B. Referenzzeichen 60 in Figur 7a). Mittels dieser Ablage, welche auf dem Sensor in zwei Richtungen bestimmbar ist, kann eine Positionsänderung des Reflektors detektiert und der Laserstrahl entsprechend dieser Änderung nachgeführt und somit fortlaufend der Reflektor angezielt werden.

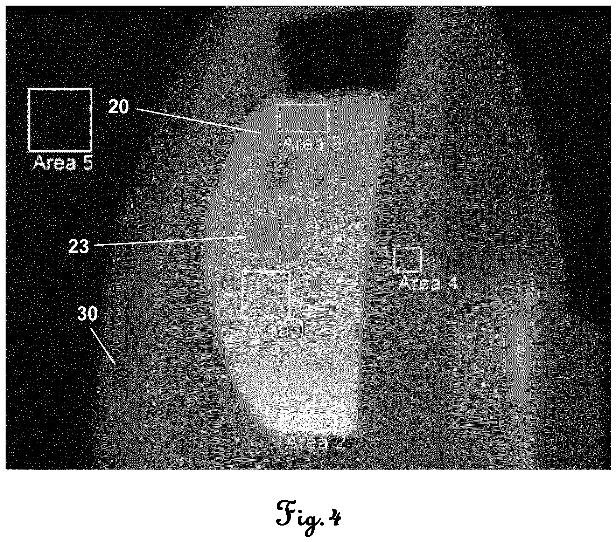

Fig. 4 zeigt in einer Ausschnittsvergrösserung eine Infrarotaufnahme bzw. ein Wärmebild des Bereichs der Oberflächentemperaturen der Anzieleinheit 20 eines Lasertrackers, der - bis auf den erfindungsgemässen rohrförmigen Körper zur Reduktion von Turbulenzeffekten im Freistrahlgang-Nahbereich des Messstrahls - dem Aufbau des Lasertrackers aus Fig. 2a und 3 entspricht.

Die Wärmebildaufnahme ist dabei nach einer Warmlaufphase während eines standardgemässen Betriebes des Geräts erzeugt worden. Bereiche des Gehäuses mit vergleichsweise höherer Temperatur sind im Wärmebild vergleichsweise hell dargestellt, und Bereiche des Gehäuses mit vergleichsweise niedrigerer Temperatur sind im Wärmebild vergleichsweise dunkel dargestellt.

Der Bereich "Area 1" unterhalb der Messstrahlungsaustritts-Apertur 23 (zugleich Aufnahmeobjektiv) der Anzieleinheit 20 ist weitgehend massgeblich für das Aufwärmen von Luft, die dann einen Freistrahlgang im Nahbereich der Messstrahlungsaustritts-Apertur 23 durchströmt. Insbesondere Temperaturgradienten, die in den Bereich des Nahbereichs-Freistrahlgang hinein bestehen, sind im Wesentlichen ursächlich für Brechungsindex-Fluktuationen, die zu einem hohen Mass verantwortlich für Ungenauigkeiten bzw. Fehler bei der Winkel- und Entfernungsbestimmung sind. Für Zwecke der Anordnungsoptimierung sind weitere ausgewählte Bereiche ("Area 2", "Area 3", "Area 4" und "Area 5") des erfassten Infrarotbildes ausgewiesen und werden in einer Optimierung im Rahmen der Gesamtauswertung besonders berücksichtigt, wenn auch nicht hier weiter illustriert.

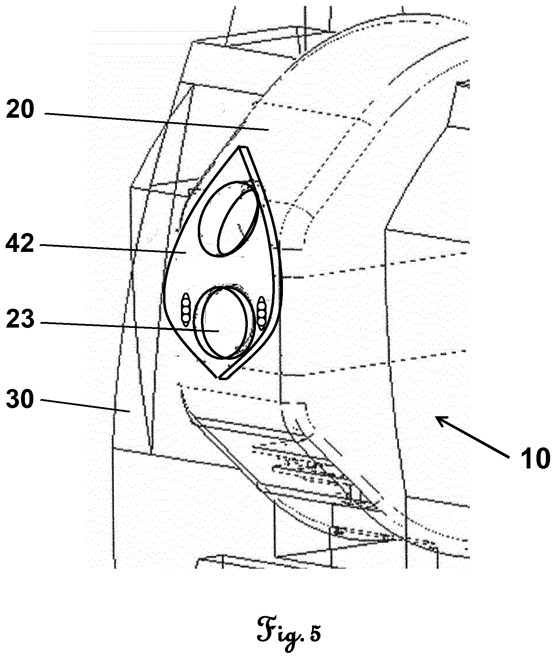

Fig. 5 zeigt den Bereich der Anzieleinheit 20 eines beispielhaften Lasertrackers mit einer Wärmeeinfluss-Verringerungskomponente. Hierbei handelt es sich um einen wärmeisolierenden Schild 42 beispielsweise aus Kunststoffen. Der Schild 42 ist angebracht auf der Front des Gehäuses der Anzieleinheit 20 und überdeckt weitgehend Wärme-exponierte Teile davon mit Aussparungen für das Variokameraobjektiv 22, die Messstrahlungsaustritts-Apertur 23 sowie Kameras 24 und Beleuchtungsmittel 25, entsprechend der Ausführungsform eines Lasertrackers gemäss Fig. 2a und 3. Diese als Schild 42 ausgebildete Teilhülle weist zwecks zusätzlicher Behinderung einer Wärmeübertragung einen Luftspalt gegenüber dem betriebsbedingt erwärmten Metallgehäuse von Anzieleinheit / Teleskop auf. Demgegenüber ist ein dichter Abschluss am nach aussen (also Richtung Empfangslichtstrahl) weisenden Umfang vorgesehen.

Fig. 6 illustriert für den Darstellungsbereich von Fig. 5, in einem Wärmebild analog zu Fig. 4, die Auswirkung des wärmeisolierenden Schilds 42 gemäss der Ausführungsform von Fig. 5. Wie gut ersichtlich sind die Bereiche direkt vor dem Schild 42, im Vergleich zu dem Temperaturdiagramm von Fig. 4, deutlich kühler (da im Wärmebild klar ersichtlich dunkler dargestellt).

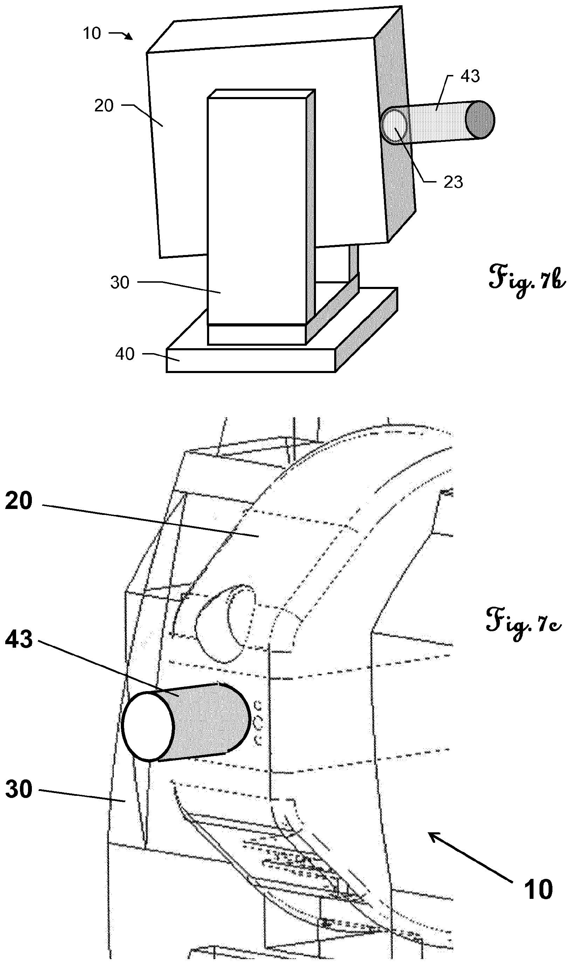

Figuren 7a bis 7c sind verschiedene Ansichten von Lasertrackern dargestellt, die aufgebaut sind ähnlich zu den in den Figuren 1 und 2a gezeigten Beispielen. Figuren 7a und 7b zeigen dabei Ansichten von Lasertrackern, die etwa aufgebaut sein können wie der in Figur 1 gezeigte Lasertracker und Figur 7c zeigt eine Ansicht eines Lasertrackers gemäss der Figuren 2a und 3, wobei die Ansicht weitgehend analog ist wie in der Darstellung aus Figur 5.

In den Figuren 7a bis 7c sind erfindungsgemässe Ausführungsformen gezeigt, bei denen die Wärmeeinfluss-Verringerungskomponente jeweils als rohrförmiger Körper ausgebildet ist. Hierbei handelt es sich um eine wärmeisolierende rohrförmige Abschirmung 43, wiederum aus thermisch möglichst leitendem Material, beispielsweise Kunststoffen. Die Rohrabschirmung 43 umgibt den Nahbereichs-Strahlengang der Anzieleinheit (20) mit der Messstrahlungsaustritts-Apertur 23. Durch Abwärme, insbesondere durch den Lasertracker, beeinflusste Luft ist somit also nun zum Umströmen des Nahbereichs-Frei-Strahlengangs der Messstrahlung (also den Freistrahlgang der Messstrahlung in der Nahzone des Geräts) gezwungen, sodass die Luftströme einen geringeren oder keinen Einfluss mehr auf die optischen Eigenschaften der Messstrahlung im Nahbereich des Geräts haben.

Die ansonsten durch die aufsteigende Warmluft (die ohne Rohrabschirmung 43 den Freistrahlgang innerhalb einer Nahzone des Geräts durchströmen würde) entstehenden Turbulenzeffekte, welche die Richtung des Messstrahls beeinflussen (vgl. Luftflimmern), können anhand einer solchen Rohrabschirmung 43 effektiv deutlich verringert werden. Ein wesentlicher Anteil der Negativauswirkungen solcher Turbulenzeffekte kann bereits vermieden werden, wenn die Rohrabschirmung 43 eine Dimensionierung von z.B. mindestens etwa 2 cm Länge aufweist.

Die rohrförmige Abschirmung ist hier rein beispielhaft mit einem runden Querschnitt ausgeführt. Die Abschirmung kann jedoch auch einen ovalen oder elliptischen Querschnitt, oder insbesondere auch einen eckigen (z.B. quadratischen, fünf- oder sechseckigen, etc.) Querschnitt aufweisen.

Zusammengefasst kann also die erfindungsgemässe Wärmeeinflussverringerungskomponente als rohrförmiger Körper mit im Wesentlichen luftundurchlässiger Rohrwand ausgebildet und derart angeordnet sein, dass der Körper zumindest einen Teil des Nahbereichs-Freistrahlgangs umgibt (sodass dadurch also Luftströme am Durchdringen des durch den Körper abgedeckten Teils des Nahbereichs-Strahlengangs gehindert werden und somit Turbulenzen im Nahbereichs-Freistrahlgang, etwa hervorgerufen durch aufsteigende Warmluft, verringert werden).

Der rohrförmige Körper kann - wie in den Figuren als Beispiel dargestellt - ein Hohl- bzw.

Innenquerschnittsausmass (Innendurchmesser) aufweisen, welches mit einem Ausmass (bzw. Durchmesser) der Messstrahlungsaustritts-Apertur 23 korrespondiert. D.h., dass das Innenquerschnittsausmass des rohrförmigen Körpers das Ausmass der Messstrahlungsaustritts-Apertur 23 z.B. nur wenig/unwesentlich (minimal) übersteigt. Ferner kann der rohrförmige Körper auch einen Querschnitt (was die Form betrifft, also eine Querschnittsform) aufweisen, welcher mit der Form der Messstrahlungsaustritts-Apertur 23 korrespondiert. Insbesondere ist sowohl die Messstrahlungsaustritts-Apertur 23 als auch die Querschnittsform des Körpers kreisrund. Allerdings kann auch eine ovale, elliptische oder vieleckige (vier, fünf-, sechseckige, etc.) Form gewählt werden.

Wie ebenso den Figuren entnommen werden kann ist der rohrförmige Körper mit einem seiner Enden direkt an einem die Messstrahlungsaustritts-Apertur 23 umgebenden Teil des Gehäuses angeordnet (befestigt).

Der rohrförmige Körper weist eine Länge von mindestens 2 cm, insbesondere mindestens 3 cm, auf. Experimentelle Versuche haben dabei gezeigt, dass eben ab einer Länge von mindestens 2 cm schon ein deutlicher Genauigkeitszugewinn (was die Winkel- und Distanzmessung betrifft) erzielbar ist. Bei einer Länge von 5 cm oder gar 10 cm kann zwar dieser Genauigkeitszuwachs nochmals deutlich gesteigert werden, allerdings können dann oft auch ein konstruktionsbedingter Zusatzaufwand (bzw. Umwege in der Konstruktion, die ungern in Kauf genommen werden) erforderlich sein.

Eine Innenwandfläche des rohrförmigen Körpers kann dabei möglichst wenig reflektierend (d.h. unreflektierend) ausgeführt sein. Beispielsweise kann die Innenwandfläche als dunkle, leicht raue (also unpolierte/ungeglättete) Kunststoffoberfläche ausgeführt sein, sodass an der inneren Oberfläche des Rohrs (Innenseite) keine Störreflexe erzeugt werden.

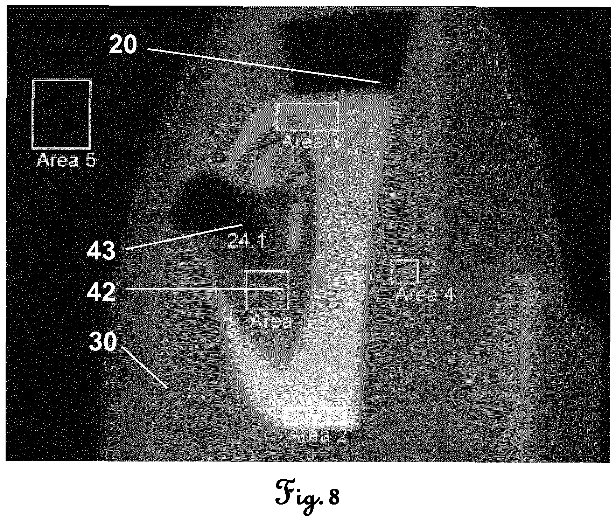

Fig. 8 illustriert für den Darstellungsbereich von Fig. 7, in einem Wärmebild analog zu Fig. 4 und Fig. 6, die gemeinsame Auswirkung der wärmeisolierenden Rohrabschirmung 43 gemäss der Ausführungsform der erfindungsgemässen Wärmeeinfluss-Verringerungskomponente von Fig. 7 und des wärmeisolierenden Schilds gemäss Fig.5 und Fig. 6. Selbstverständlich sind die Bereiche direkt vor dem Schild 42, im Vergleich zu dem Temperaturdiagramm von Fig. 4, kühler.

Im Bereich des von der Rohrabschirmung 43 umgebenen Nahbereichs-Frei-Strahlengangs ergibt sich eine wesentlich stärkere Temperaturabsenkung, nämlich auf einen Wert nahe der Geräteumgebungstemperatur.

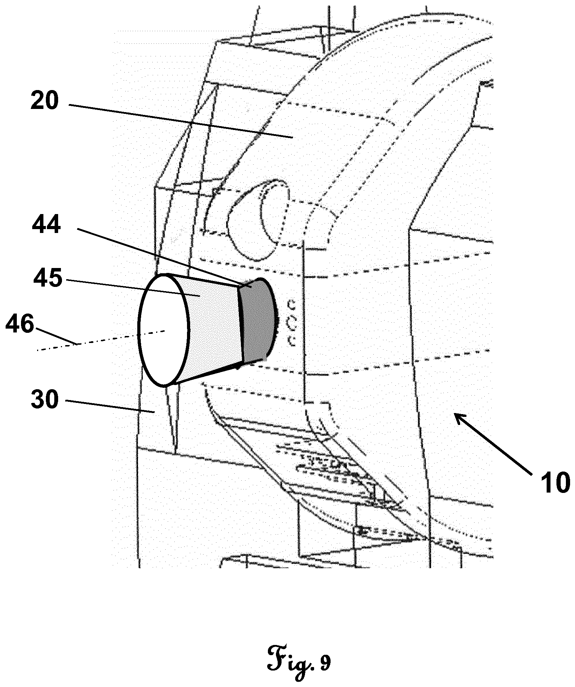

Fig. 9 zeigt den Bereich der Anzieleinheit 20 einer nicht direkt die Erfindung betreffenden weiteren Ausführungsform eines Lasertrackers mit einer anderen Ausführungsform 44, 45 einer Wärmeeinfluss-Verringerungskomponente. Hierbei handelt es sich eine die Messstrahlungsaustritts-Apertur 23 (hier nicht sichtbar) umgebende Ringdüse 44, mit der ein den Nahbereichs-Strahlengang, welcher hier durch seine optische Achse 46 gekennzeichnet ist, konus- bzw. kegelstumpfförmig umgebender Luftstrom als ein Luftstrompolster 45 erzeugt wird. Dieser Luftstrom 45 verhindert ein Durchqueren des Nahbereichs-Strahlengangs durch Abwärme-Luftströmungen.

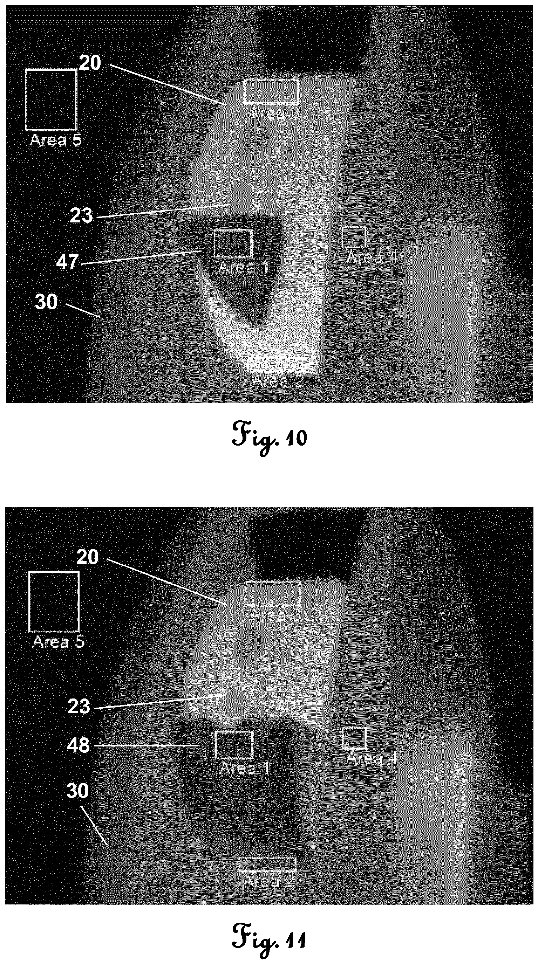

Die Figuren 10 bis 13 zeigen, aussschliesslich in Form von Wärmebildern, die Auswirkungen weiterer Ausführungsformen zusätzlicher Wärmeeinfluss-Verringerungskomponenten auf die Temperaturverteilung im Bereich der Anzieleinheit 20 entsprechend ausgerüsteter Ausführungsformen erfindungsgemässer Lasertracker.

Fig. 10 zeigt den Effekt einer dreieckförmig aus Polyethylen-Schaum ("PE-Foam") ausgebildeten Ausführungsform 47 einer zusätzlichen Wärmeeinfluss-Verringerungskomponente, die knapp unterhalb der Messstrahlungsaustritts-Apertur 23 angeordnet ist.

Fig. 11 zeigt den Effekt eines die untere Hälfte der Anzieleinheit 20 vollständig abdeckenden Abschirmung 48 aus Polyethylen-Schaum ausgebildeten Ausführungsform 48 einer zusätzlichen Wärmeeinfluss-Verringerungskomponente, welche die Messstrahlungsaustritts-Apertur 23 in deren unterem Bereich teilweise umgibt.

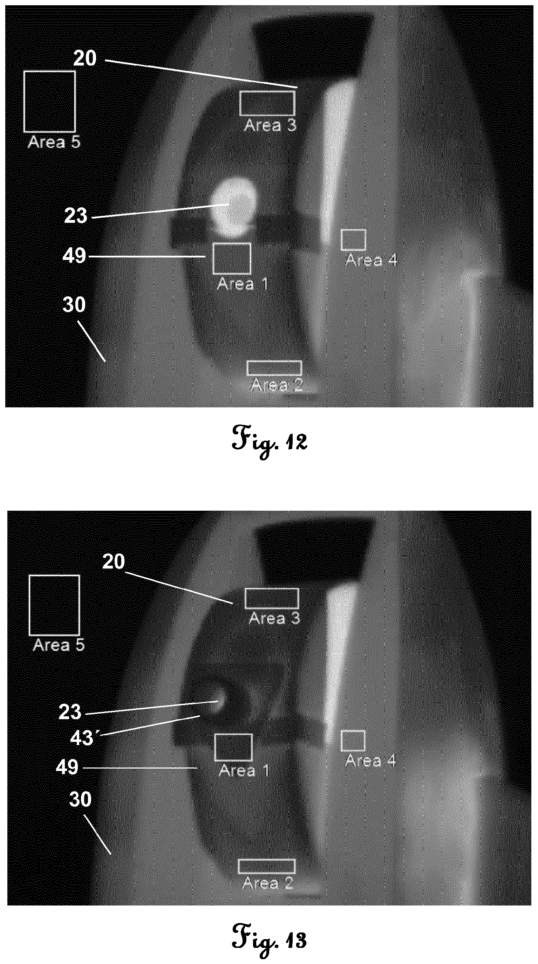

Fig. 12 zeigt den kombinierten Effekt mit einer, zusätzlich zu der Ausführungsform gemäss Fig. 11, auch die obere Hälfte der Anzieleinheit 20 vollständig abdeckenden Abschirmung, also einer Vollabschirmung 49 aus Polyethylen-Schaum ausgebildeten Ausführungsform 49 einer zusätzlichen Wärmeeinfluss-Verringerungskomponente, welche die Messstrahlungsaustritts-Apertur 23 vollständig umgibt.

Fig. 13 illustriert den Effekt mit einer Kombination aus der Vollabschirmung 49 gemäss Fig. 12 und einer erfindungsgemässen Ausführung 43' einer rohrförmigen Abschirmung. Die hier eingesetzte rohrförmige Abschirmungskomponente 43' ist aus Polyoxymethylen (POM) gefertigt und weist eine Länge von 40 mm auf. Auch mit dieser Ausführungsform hier, wobei das Rohr hier etwas kürzer gewählt ist als bei der in Figur 8 in der Wärmebildaufnahme gezeigten Ausführungsform, kann schon eine deutliche Temperaturabsenkung im Bereich des Nahbereichs-Freistrahlgangs dem Wärmebild abgelesen werden (allerdings nicht ganz so weit wie bei dem langen Rohr gemäss Figur 8).

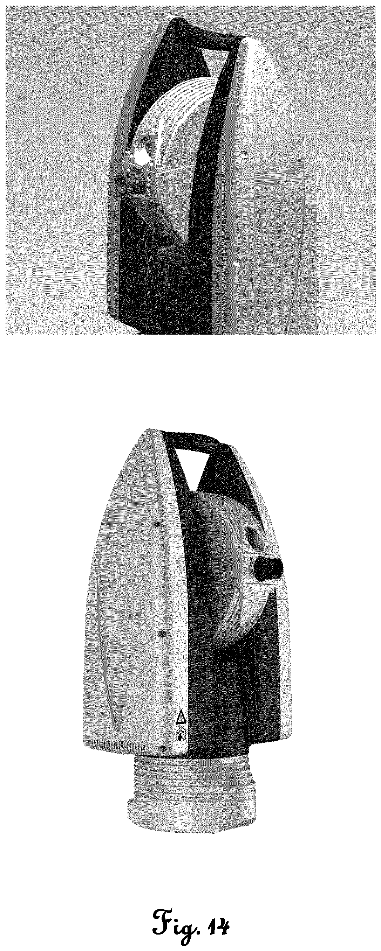

Fig. 14 zeigt zwei weitere Darstellungen für ein Beispiel eines Lasertracker mit erfindungsgemässer rohrförmiger Abdeckung. Die Ausführungsform entspricht dabei im Prinzip wiederum derjenigen, die schematisch in Fig. 2a, 3 und 7c gezeigt ist.

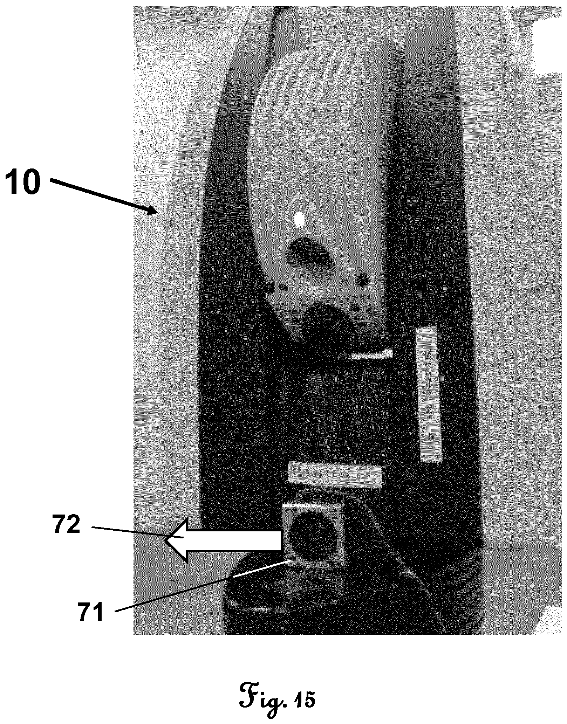

Die Figuren 15 bis 17 zeigen - hinsichtlich des funktionalen Prinzips andere als entsprechend den vorangehenden Beispielen ausgebildete - Ausführungsformen einer zusätzlichen Wärmeeinfluss-Verringerungskomponente für einen erfindungsgemässen Lasertracker 10.

Dabei zeigt Fig. 15 als Beispiel für eine solche weitere Ausführungsform 71, 72 einer zusätzlichen Wärmeeinfluss-Verringerungskomponente einen zusätzlichen Lüfter bzw. Ventilator 71, der auf dem Sockel bzw. der Basis des erfindungsgemässen Lasertrackers 13 angeordnet und betrieben ist, um in einer Ebene parallel zu der optischen Achse des Nahbereichs-Strahlengangs der Empfangsoptik des Lasertrackers 10 (siehe Fig. 9) Abwärme, insbesondere aus dem Sockelteil, in dieser Ebene, signifikant entfernt von besagter optischer Achse, abzusaugen und seitwärts in einem Luftstrom 72 abzublasen, so dass keine Beeinflussung des Nahbereichs-Strahlengangs durch diese Abwärme entsteht.

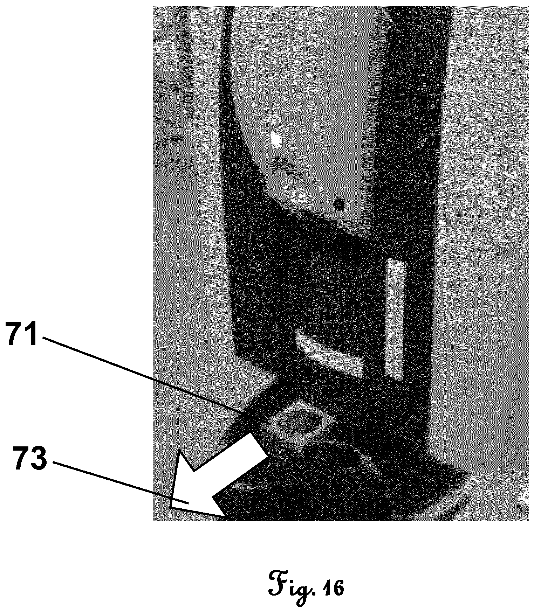

In einer Abwandlung zu dem Ausführungsbeispiel gemäss Fig. 15 zeigt Fig. 16 als Beispiel für eine weitere Ausführungsform 71, 73 einer zusätzlichen Wärmeeinfluss-Verringerungskomponente einen zusätzlichen Lüfter bzw. Ventilator 71, der auf dem Sockel bzw. der Basis des erfindungsgemässen Lasertrackers 10 angeordnet und betrieben ist, um in einer Ebene parallel zu der optischen Achse des Nahbereichs-Strahlengangs der Empfangsoptik des Lasertrackers 10 (siehe Fig. 9) Abwärme, insbesondere aus dem Sockelteil, in dieser Ebene abzusaugen und seitwärts, senkrecht zu der Abblasrichtung gemäss Fig. 15, in einem Luftstrom 73 abzublasen, so dass keine Beeinflussung des Nahbereichs-Strahlengangs durch diese Abwärme entsteht.

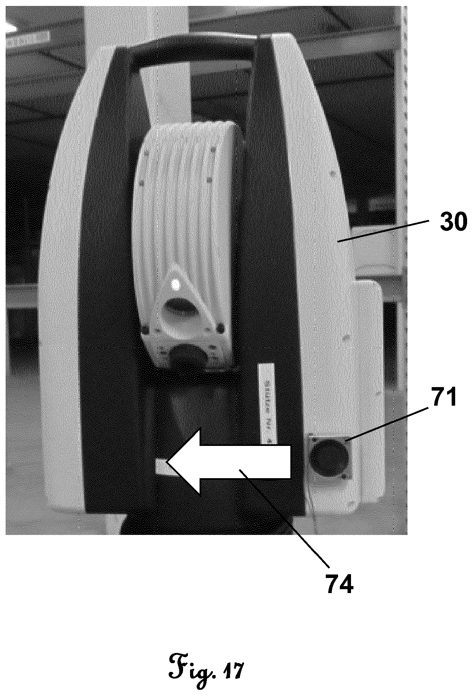

In einer weiteren Abwandlung zu den Beispielen gemäss Fig. 15 und Fig. 16 zeigt Fig. 17 als Beispiel für eine weitere Ausführungsform 71, 74 einer zusätzlichen Wärmeeinfluss-Verringerungskomponente einen zusätzlichen Lüfter bzw. Ventilator 71, der in einem unteren Bereich der Stütze 30 des Lasertrackers 13 angeordnet und betrieben ist, um in einer Ebene parallel zu der optischen Achse 46 des Nahbereichs-Strahlengangs der Empfangsoptik des Lasertrackers (siehe Fig. 9) nicht betriebsbedingt erwärmte Umgebungsluft anzusaugen und in einem Luftstrom 74 abzublasen, um aus dem Bereich der Basis aufsteigende Abwärme von einem Eindringen in den Nahbereichs-Strahlengangs des Geräts zu behindern, insbesondere einen solchen Aufstieg zu verhindern.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander als eine Wärmeeinfluss-Verringerungskomponente, insbesondere für einen erfindungsgemässen Lasertracker einsetzbar sowie auch mit entsprechenden Vorrichtungen und Verfahren des Stands der Technik kombinierbar sind.

Verringerungskomponente, insbesondere für ein erfindungsgemässes Koordinatenmessgerät bzw. einen erfindungsgemässen Lasertracker einsetzbar sowie auch mit entsprechenden Vorrichtungen und Verfahren des Stands der Technik kombinierbar sind.

## Patentansprüche

1. Lasertracker (10) für die industrielle Vermessung, zur fortlaufenden Positionsbestimmung und fortlaufenden Verfolgung eines als Retroreflektor (90) ausgebildeten oder zumindest einen Retroreflektor (51) aufweisenden Ziels, wobei der Lasertracker (10) mindestens aufweist
• eine eine Stehachse definierende Basis (40),
• eine Strahllenkeinheit zur Emission einer Messstrahlung (17, 21) aus einer Messstrahlungsaustritts-Apertur (23) und zum Empfang von zumindest einem Teil der am Ziel reflektierten Messstrahlung (17, 21), wobei
∘ die Strahllenkeinheit um die Stehachse und eine Neigungsachse (31) relativ zur Basis (40) motorisiert schwenkbar ist und
∘ durch eine Emissionsrichtung der Messstrahlung (17, 21) eine Messachse definiert ist,
• eine Distanzmesseinheit zur präzisen Distanzbestimmung zum Ziel vermittels der Messstrahlung (17, 21),
• eine Winkelmessfunktionalität zur Bestimmung einer Ausrichtung der Strahllenkeinheit relativ zur Basis (40) und
• eine Zielerfassungseinheit (60) zur Bestimmung eines Auftreffpunkts von vom Retroreflektor reflektierter Strahlung auf einem Sensor der Zielerfassungseinheit (60) und zur Erzeugung eines Ausgangssignals zur Steuerung einer Fein-Anzielfunktionalität und einer Zielverfolgungsfunktionalität, wobei Distanz und Position des Ziels fortlaufend relativ zum Lasertracker (10) bestimmt werden,
**gekennzeichnet durch**
eine als rohrförmiger Körper mit einer Länge von mindestens 2 cm und mit im Wesentlichen luftundurchlässiger Rohrwand ausgebildete Wärmeeinflussverringerungskomponente (43, 43'), die derart ausgebildet und am Lasertracker (10) angeordnet ist, dass besagter rohrförmiger Körper zumindest einen Teil eines Nahbereichs-Freistrahlgangs nach der Messstrahlungsaustritts-Apertur (23), d.h. einen nach der Messstrahlungsaustritts-Apertur (23) befindlichen Freistrahlgang der Messstrahlung im Nahbereich des Lasertrackers (10), umgibt, sodass dadurch Warmluft, die durch durch Erhitzung von inneren Komponenten des Lasertrackers (10) bewirkte Wärmeabstrahlung erzeugt wird, bei ihrem wärmebedingten Aufstieg am Durchdringen des durch den Körper abgedeckten Teils des Nahbereichs-Freistrahlgang gehindert, nämlich vorbeigeführt, wird und somit Turbulenzen im Nahbereichs-Freistrahlgang, hervorgerufen durch solch aufsteigende Warmluft, verringert werden.

2. Lasertracker (10) nach Anspruch 1,
**gekennzeichnet durch**
• eine um die Stehachse relativ zur Basis (40) motorisiert schwenkbare und die Neigungsachse (31) definierende Stütze (30) und **dadurch, dass**
• die Strahllenkeinheit als eine Anzieleinheit (20) mit einer Teleskopeinheit ausgebildet ist, die um die Neigungsachse (31) relativ zur Stütze (30) motorisiert schwenkbar ist.

3. Lasertracker (10) nach einem der Ansprüche 1 bis 2, **dadurch gekennzeichnet, dass**
die Wärmeeinflussverringerungskomponente (42, 43, 43', 47, 48, 49) ein wärmeabschirmendes Material mit niedriger Wärmeleitung, insbesondere Kunststoff, umfasst.

4. Lasertracker (10) nach einem der Ansprüche 1 bis 3, **dadurch gekennzeichnet, dass**
der rohrförmige Körper ein Hohl- bzw. Innenquerschnittsausmass, insbesondere einen Innendurchmesser, aufweist, welches mit einem Ausmass, insbesondere einem Durchmesser, der Messstrahlungsaustritts-Apertur (23) korrespondiert, insbesondere wobei das Innenquerschnittsausmass des rohrförmigen Körpers das Ausmass der Messstrahlungsaustritts-Apertur (23) nur unwesentlich übersteigt.

5. Lasertracker (10) nach einem der Ansprüche 1 bis 4, **dadurch gekennzeichnet, dass**
der rohrförmige Körper mit einem seiner Enden direkt an einem die Messstrahlungsaustritts-Apertur (23) umgebenden Teil des Gehäuses angeordnet ist.

6. Lasertracker (10) nach einem der Ansprüche 1 bis 5, **dadurch gekennzeichnet, dass**
der rohrförmige Körper eine Querschnittsform aufweist, welcher mit der Form der Messstrahlungsaustritts-Apertur (23) korrespondiert.

7. Lasertracker (10) nach einem der Ansprüche 1 bis 6, **dadurch gekennzeichnet, dass**
der rohrförmige Körper einen runden, ovalen, elliptischen oder vieleckigen Querschnitt aufweist.

8. Lasertracker (10) nach einem der Ansprüche 1 bis 7, **dadurch gekennzeichnet, dass**
der rohrförmige Körper eine Länge von mindestens 3 cm aufweist.

9. Lasertracker (10) nach einem der Ansprüche 1 bis 8, **dadurch gekennzeichnet, dass**
eine Innenwandfläche des rohrförmigen Körpers unreflektierend ausgeführt ist, insbesondere wobei die Innenwandfläche als dunkle, unpolierte Kunststoffoberfläche ausgeführt ist.

## Claims

1. Laser tracker (10) for industrial measuring, for continuously determining the position and continuous tracking of a target embodied as a retroreflector (90) or at least having a retroreflector (51), the laser tracker comprising (10) at least the following:
• a base (40) defining a vertical axis,
• a beam guiding unit for emitting measurement radiation (17, 21) from a measurement radiation emergence aperture (23) and for receiving at least some of the measurement radiation (17, 21) reflected at the target, wherein
∘ the beam guiding unit is swivelable in a motor-driven manner about the vertical axis and an inclination axis (31) relative to the base (40), and
∘ a measurement axis is defined by an emission direction of the measurement radiation (17, 21),
• a distance measurement unit for precisely measuring the distance to the target by means of the measurement radiation (17, 21),
• an angle measurement functionality for determining an alignment of the beam guiding unit relative to the base (40) and
• a target acquisition unit (60) for determining an impact point of radiation reflected by the retroreflector on a sensor of the target acquisition unit (60) and for producing an output signal for controlling a fine targeting functionality and a target tracking functionality, wherein distance and position of the target relative to the laser tracker (10) are continuously determined,
**characterized by**
a heat influence reduction component (43, 43') which is embodied as a pipe-shaped body with a length of at least 2 cm and with a substantially airtight pipe wall which is embodied and arranged on the laser tracker (10) in such a way that said pipe-shaped body surrounds at least part of a near region free beam path downstream of the measurement radiation emergence aperture (23), i.e. a free beam path of the measurement radiation downstream of the measurement radiation emergence aperture (23) in the near zone of the laser tracker (10), such that, as a result thereof, warm air which is produced by heating of internal components of the laser tracker (10) is prevented from passing through the near region free beam path covered by the body, namely guided therearound, during the heat-induced rise thereof and therefore there is a reduction in turbulence in the near region free beam path which is caused by such rising warm air.

2. Laser tracker (10) according to claim 1,
**characterized by**
• a support (30) which is swivelable in a motor-driven manner about the vertical axis relative to the base (40) and defines the inclination axis (31), and in that
• the beam guiding unit is embodied as a targeting unit (20) with a telescope unit, which is swivelable in a motor-driven manner about the inclination axis (31) relative to the support (30).

3. Laser tracker (10) according to one of claims 1 to 2,
**characterized in that**
the heat influence reduction component (42, 43, 43', 47, 48, 49) comprises a heat-shielding material with low thermal conductivity, in particular a polymer.

4. Laser tracker (10) according one of claims 1 to 3,
**characterized in that**
the pipe-shaped body has a hollow or internal cross-sectional dimension which corresponds to a dimension, in particular a diameter, of the measurement radiation emergence aperture (23), in particular wherein the internal cross-sectional dimension of the pipe-shaped body only slightly exceeds the dimension of the measurement radiation emergence aperture (23).

5. Laser tracker (10) according to one of claims 1 to 4,
**characterized in that**,
with one of the ends thereof, the pipe-shaped body is arranged directly at part of the housing surrounding the measurement radiation emergence aperture (23).

6. Laser tracker (10) according to one of claims 1 to 5,
**characterized in that**
the pipe-shaped body has a cross-sectional shape which corresponds to the shape of the measurement radiation emergence aperture (23).

7. Laser tracker (10) according to one of claims 1 to 6,
**characterized in that**
the pipe-shaped body has a round, oval, elliptic or polygonal cross-section.

8. Laser tracker (10) according to one of claims 1 to 7,
**characterized in that**
the pipe-shaped body has a length of at least 3 cm.

9. Laser tracker (10) according to one of claims 1 to 8,
**characterized in that**
an internal wall surface of the pipe-shaped body has a non-reflecting configuration, in particular wherein the internal wall surface is configured is dark, unpolished polymer surface.

## Revendications

1. Appareil de suivi laser (10) pour le mesurage industriel pour la détermination en continue de la position et la poursuite continue d'une cible configurée comme un rétroréflecteur (90) ou d'une cible présentant au moins un rétroréflecteur (51), cependant que l'appareil de suivi laser (10) présente au moins
• une base (40) qui définit un axe vertical,
• une unité de direction des rayons pour l'émission d'un rayonnement de mesure (17, 21) à partir d'une ouverture de sortie (23) du rayonnement de mesure et pour la réception d'au moins une partie du rayonnement de mesure (17, 21) réfléchi sur la cible, cependant que
∘ l'unité de direction des rayons est pivotante par rapport à la base (40) de manière motorisée autour de l'axe vertical et d'un axe d'inclinaison (31) et
∘ qu'un axe de mesure est défini par une direction d'émission du rayonnement de mesure (17, 21),
• une unité de mesure de la distance pour la détermination précise de la distance par rapport à la cible au moyen du rayonnement de mesure (17, 21),
• une fonctionnalité de mesure d'angle pour la détermination d'une orientation de l'unité de direction des rayons par rapport à la base (40) et
• une unité de détection de cible (60) pour la détermination d'un point d'impact du rayonnement réfléchi par le rétroréflecteur sur un détecteur de l'unité de détection de cible (60) et pour produire un signal de sortie pour la commande d'une fonctionnalité de visée fine et d'une fonctionnalité de poursuite de la cible, cependant que la distance et la position de la cible sont déterminées en continu par rapport à l'appareil de poursuite laser (10),
**caractérisé par** une composante de réduction d'influence de la chaleur (43, 43') configurée comme un corps tubulaire d'une longueur d'au moins 2 cm et avec une paroi de tube substantiellement imperméable à l'air, qui est configurée et placée sur l'appareil de suivi laser (10) de telle manière que ledit corps tubulaire entoure au moins une partie d'une trajectoire de faisceau libre de proximité après l'ouverture de sortie (23) du rayonnement de mesure, c'est-à-dire une trajectoire de faisceau libre qui se trouve après l'ouverture de sortie (23) du rayonnement de mesure à proximité de l'appareil de suivi laser (10) si bien que de l'air chaud qui est produit par le dégagement de chaleur provoqué par le réchauffement des composants intérieurs de l'appareil de suivi laser (10) est empêché, lors de sa montée due à la chaleur, de pénétrer à travers la partie de la trajectoire de faisceau libre de proximité qui est couverte par le corps, notamment en passant à côté, et que des turbulences dans la trajectoire de faisceau libre de proximité, causées par cet air chaud qui monte, sont réduites.

2. Appareil de suivi laser (10) selon la revendication 1, **caractérisé par**
• un support (30) pivotant autour de l'axe vertical de manière motorisée par rapport à la base (40) et qui définit l'axe d'inclinaison (31) et en ce que
• l'unité de direction des rayons est configurée comme un unité de visée fine (20) avec une unité de télescope qui est pivotante de manière motorisée par rapport au support (30) autour de l'axe d'inclinaison (31).

3. Appareil de suivi laser (10) selon l'une des revendications 1 à 2, **caractérisé en ce que** l'unité de réduction de l'influence de la chaleur (42, 43, 43', 47, 48, 49) est un matériau de blindage de la chaleur avec une faible conduction thermique, en particulier un plastique.

4. Appareil de suivi laser (10) selon l'une des revendications 1 à 3, **caractérisé en ce que** le corps tubulaire présente une dimension de section creuse ou intérieure, en particulier un diamètre intérieur, qui correspond à une dimension, en particulier un diamètre, de l'ouverture de sortie (23) du rayonnement de mesure, en particulier cependant qu'une dimension de section intérieure du corps tubulaire ne dépasse la dimension de l'ouverture de sortie (23) du rayonnement de mesure que de manière négligeable.

5. Appareil de suivi laser (10) selon l'une des revendications 1 à 4, **caractérisé en ce que** le corps tubulaire est placé avec l'une de ses extrémités directement sur une partie du bâti qui entoure l'ouverture de sortie (23) du rayonnement de mesure.

6. Appareil de suivi laser (10) selon l'une des revendications 1 à 5, **caractérisé en ce que** le corps tubulaire présente une forme de section qui correspond à la forme de l'ouverture de sortie (23) du rayonnement de mesure.

7. Appareil de suivi laser (10) selon l'une des revendications 1 à 6, **caractérisé en ce que** le corps tubulaire présente une section ronde, ovale, elliptique ou polygonale.

8. Appareil de suivi laser (10) selon l'une des revendications 1 à 7, **caractérisé en ce que** le corps tubulaire présente une longueur d'au moins 3 cm.

9. Appareil de suivi laser (10) selon l'une des revendications 1 à 8, **caractérisé en ce qu'**une surface de paroi intérieure du corps tubulaire est réalisée non réfléchissante, en particulier cependant que la surface de paroi intérieure est réalisée comme une surface foncée en plastique, non polie.
